# EUROPEAN PATENT APPLICATION

(11) **EP 3 038 399 A1**
(43) Date of publication of application: **29.06.2016**
(21) Application number: 13891689.5
(22) Date of filing: 23.08.2013
(51) Int. Cl.: H04W 16/14, H04W 48/08, H04W 84/10, H04W 84/12

(54) **RADIO COMMUNICATION METHOD, RADIO COMMUNICATION SYSTEM, RADIO TERMINAL, RADIO BASE STATION, AND CONTROL APPARATUS**

(71) Applicant: Fujitsu Ltd., Kawasaki-shi, Kanagawa 211-8588 (JP)
(72) Inventor: OYAMA, Teppei, Kawasaki-shi Kanagawa 211-8588 (JP); SHIMOMURA, Tsuyoshi, Kawasaki-shi Kanagawa 211-8588 (JP)
(74) Representative: Hutchison, James
(86) International application number: PCT/JP2013/005003
(87) International publication number: WO 2015/025344

(57) **Abstract**

An object of the disclosed technique is to reduce interference between a plurality of wireless communication systems interfering with each other.

A disclosed wireless communication method is a wireless communication method of a wireless communication system including a synchronous system that performs synchronous wireless communication, and an asynchronous system that performs asynchronous wireless communication interfering with the synchronous system, in which a wireless terminal belonging to the asynchronous system acquires first information regarding a transmission stop period of a first wireless signal of the synchronous system, and the wireless terminal adjusts timing when the wireless terminal transmits a second wireless signal, so as to suppress an overflow of the second wireless signal into a period subsequent to the transmission stop period, based on the first information.

## Description

### FIELD

The present invention relates to a wireless communication method, a wireless communication system, a wireless terminal, a wireless base station, and a control device.

### BACKGROUND

In recent years, wireless traffic has continued to increase rapidly, and demand for frequencies of wireless signals, which are finite resources, continues to increase. A study for a cognitive radio technique for performing optimum communication by recognizing a surrounding radio wave environment has progressed, as a method for increasing the use efficiency of frequencies. For example, a function of searching for a white space (WS) of a frequency depending on time and location and performing communication so as not to interfere with a system capable of using each frequency preferentially has been known as white space (or a frequency shared type) cognitive radio. For example, using the TV white space (TVWS) communication has been studied in the United States.

In the white space cognitive radio, a system with a priority to use the frequency of the white space is referred to as a primary system. Further, a system without a priority to use the frequency of the white space, which is to be operated so as not to interfere with the primary system, is referred to as a secondary system.

In the example of TVWS, TV broadcasting is a primary system. Further, WiMAX (registered trademark), that is, 802.22 which is an extension based on 802.16 standard, Wi-Fi (registered trademark), that is, 802.11af which is an extension based on 802.11 standard, 802.15.4m which is an extension based on Zigbee (registered trademark) standard, and the like are known as the standards for the secondary system for TVWS. In the future, it is considered that a system based on an LTE system of 3GPP is likely to be operated as a secondary system. In this manner, a system based on various existing wireless access systems is assumed as a secondary system.

In the white space cognitive radio, the number of secondary systems is not limited to one. In other words, a case where a plurality of secondary systems coexist is also considered. As described above, the use of white space is expected to have an effect of increasing the use efficiency of the frequency, but a plurality of secondary systems share the white space, such that the case is also considered where the use efficiency of the frequency is further increased. The importance of coexistence of the plurality of secondary systems is considered to further increase in the future.

In IEEE 802.19 work, the standard specifications have been developed for the purpose of realizing a smooth coexistence of a plurality of secondary systems in the white space cognitive radio. Specifically, a coexistence manager (CM), a coexistence enabler (CE), and a coexistence discovery and information server (CDIS), which are the three functional entities for coexistence of the secondary system, are defined. The CM mainly makes decisions for coexistence. The CE is an interface for the control and information exchange between respective wireless communication devices in the secondary system and the CM. The CDIS is a server that manages various types of information of the plurality of secondary systems.

### Citation List

### Non Patent Literature

NPL 1: S. Haykin, "Cognitive radio: Brain-empowered wireless communications", IEEE Journal on Selected Areas in Communications, Vol. 23, No. 2, Feb. 2005
NPL 2: FCC, "Second Memorandum Opinion and order" in ET Docket No. 04-186, Sep. 23, 2010
NPL 3: M. Beluri, "Mechanisms for LTE Coexistence in TV White Space" IEEE DySPAN 2013
NPL 4: IEEE P802.19-11/0011r1 https://mentor.ieee.org/802.19/dcn/11/19-11-0011-01-0001-coexistence-system-description.pdf

### SUMMARY

### Technical Problem

When a plurality of secondary systems coexist in the white space cognitive radio, not only interference caused by the secondary system for the primary system, but also interference between the plurality of secondary systems is problem. In the white space cognitive radio, any of the plurality of secondary systems uses the frequency that is included in the white space. Therefore, the frequencies used by the plurality of secondary systems may conflict (frequencies are the same as each other or close to each other), and if other conditions are satisfied, there is a possibility that one secondary system interferes with another secondary system. In addition, as other conditions, a distance and transmission power between the secondary systems are considered.

Here, according to the standard specifications of IEEE 802.19 as described above, it is possible to manage or control the interference between the plurality of secondary systems in the white space cognitive radio, to some extent. For example, if there are many available channels in the white space, it is possible to suppress interference between the secondary systems, by assigning channels (for example, channels having frequencies sufficiently spaced from each other) to the plurality of secondary system so as not to interfere with each other.

However, in the case where there are less available channels in the white space, the channels interfering with each other (for example, the same channel) are to be allocated to the plurality of secondary systems. There is doubt that the standard specification of IEEE 802.19 alone can sufficiently deal with the interference in such a case. The standard specification of IEEE 802.19 roughly defines a function for smooth coexistence of the plurality of secondary systems, and does not sufficiently take into account the management and control in accordance with the characteristics of each secondary system. Thus, in the related art, there is a problem of a possibility that it is not possible to sufficiently reduce the interference between the plurality of secondary systems which interfere with each other.

Although the problem of the interference occurring between the plurality of secondary systems in the white space cognitive radio has been discussed in the above description, as an example, it is noted that the same type of problem may also occur in other situations. More generally, it is considered that the same type of problem may occur in a plurality of wireless communication systems in which one interferes with another. Accordingly, it is noted that the application field of the technique of the present disclosure described later is not limited to the reduction of the interference occurring between the plurality of secondary systems which may interfere with each other in the white space cognitive radio.

The disclosed technique has been made in view of the above problems, and an object is to provide a wireless communication method, a wireless communication system, a wireless terminal, a wireless base station, and a control device, which reduce the interference between the plurality of wireless communication systems which may interfere with each other.

### Solution to Problem

In order to solve the above described problems and achieve an object, a disclosed wireless communication method is a wireless communication method of a wireless communication system including a synchronous system that performs synchronous wireless communication, and an asynchronous system that performs asynchronous wireless communication interfering with the synchronous system, in which a wireless terminal belonging to the asynchronous system acquires first information regarding a transmission stop period of a first wireless signal of the synchronous system, and the wireless terminal adjusts timing when the wireless terminal transmits a second wireless signal, so as to suppress an overflow of the second wireless signal to a period subsequent to the transmission stop period, based on the first information.

### Advantageous Effects of Invention

According to aspects of a wireless communication method, a wireless communication system, a wireless terminal, a wireless base station, and a control device, which are disclosed in the present application, it is possible to achieve an effect of reducing interference in a plurality of wireless communication systems in which one interferes with the other.

### BRIEF DESCRIPTION OF DRAWINGS

FIG. 1 is a first diagram illustrating interference by transmission of a wireless signal in a case where a Wi-Fi system and an LTE system coexist.
FIG. 2 is a second diagram illustrating interference by transmission of the wireless signal in a case where the Wi-Fi system and the LTE system coexist.
FIG. 3 is a third diagram illustrating interference by transmission of the wireless signal in a case where the Wi-Fi system and the LTE system coexist.
FIG. 4 is a diagram illustrating a system configuration of a first embodiment.
FIG. 5 is a diagram illustrating an example of a processing sequence in the first embodiment.
FIG. 6 is a diagram illustrating a system configuration in a second embodiment.
FIG. 7 is a diagram illustrating an example of a processing sequence in the second embodiment.
FIG. 8 is a first diagram illustrating suppression of interference by transmission of a wireless signal in the second embodiment.
FIG. 9 is a second diagram illustrating suppression of interference by transmission of a wireless signal in the second embodiment.
FIG. 10 is a diagram illustrating an example of a processing sequence in a third embodiment.
FIG. 11 is a diagram illustrating an example of a processing sequence in a fourth embodiment.
FIG. 12 is a diagram illustrating an example of a processing sequence in a fifth embodiment.
FIG. 13 is an example of a functional configuration diagram illustrating a Wi-Fi terminal in each embodiment.
FIG. 14 is an example of a functional configuration diagram illustrating a Wi-Fi base station in each embodiment.
FIG. 15 is an example of a functional configuration diagram of a control device in each embodiment.
FIG. 16 is an example of a hardware configuration diagram of a Wi-Fi terminal in each embodiment.
FIG. 17 is an example of a hardware configuration diagram of a Wi-Fi base station in each embodiment.
FIG. 18 is an example of a hardware configuration diagram of a control device in each embodiment.

### DESCRIPTION OF EMBODIMENTS

Hereinafter, embodiments of a wireless communication method, a wireless communication system, a wireless terminal, a wireless base station, and a control device, which are disclosed, will be described with reference to the drawings. Further, although a description will be made based on separate embodiments for convenience, combined effects are achieved by combining respective embodiments, and it goes without saying that it is possible to enhance the utility.

### [Where the Problem is]

Here, prior to describing respective embodiments, it will be described where the problem is in the related art.

Unless otherwise specified in the following, a case will be considered in which a plurality of secondary systems coexist in white space cognitive radio. Here, as a premise, one of two secondary systems is a synchronous system, and the other is an asynchronous system.

The synchronous system in the present application refers to a wireless communication system in which wireless communication devices perform wireless communication synchronously with each other. Examples of the synchronous system include an LTE system, a WiMAX system, and the like. In these wireless communication systems, a base station and a terminal perform wireless communication synchronously with each other. Further, assuming that the base station is synchronized with the terminal, the base station performs scheduling for the terminal. A transmission timing of a wireless signal by the terminal is determined by the scheduling performed by the base station. Moreover, this scheduling allows conflicts between wireless signals transmitted by respective terminals to be avoided.

Meanwhile, the asynchronous system in the present application refers to a wireless communication system in which wireless communication devices perform wireless communication without being synchronized with each other. Examples of the asynchronous system include a Wi-Fi system, a Zigbee system, and the like. In these wireless communication systems, a base station (an access point) and a terminal, or terminals perform wireless communication without being synchronized with each other. Further, without assuming that the base station is synchronized with the terminal, the base station does not perform scheduling for the terminal. A transmission timing of a wireless signal by the terminal is autonomously determined by the terminal itself.

Further, in the asynchronous system, carrier sensing is likely to be performed in order to avoid collision between the wireless signals transmitted by respective terminals and the base station. For example, when the terminal transmits a wireless signal, a wireless signal transmitted by the other device is measured by performing the carrier sensing. Then, only when measurement is not performed, the wireless signal is transmitted; and when measurement is performed, the transmission of the wireless signal is postponed. Thus, the collision between the wireless signals that are transmitted by the respective terminals can be avoided.

Hereinafter, as an example, a case will be described where the synchronous system of the two coexisting secondary systems is an LTE system, and the asynchronous system is a Wi-Fi system. It is noted that even if the two coexisting secondary systems are a combination of the other synchronous system and the asynchronous system, it can be explained similarly to this. Collision avoidance of the wireless signal by the carrier sensing is performed even in the Wi-Fi system, the Zigbee system, and the like.

As the next assumption, it is assumed that the asynchronous system may interfere with the synchronous system in two coexisting secondary systems. This means that the asynchronous system and the synchronous system satisfy two conditions.

The first condition is that the frequency band used by the asynchronous system and the frequency band used by the synchronous system conflict. More specifically, it means that the frequency band used by the asynchronous system is identical to, partially overlaps, or is close to the frequency band used by the synchronous system. Here, each of the frequency bands may be referred to as a (frequency) channel, a carrier, or the like.

The second condition is that the wireless signal of the asynchronous system reaches the synchronous system. More specifically, it means that a wireless signal (radio waves) transmitted by one of the wireless communication devices belonging to the asynchronous system reaches one of the wireless communication devices belonging to the synchronous system. Here, it does not matter whether the wireless communication device is the base station or the terminal. The reachability of the wireless signal by the asynchronous system is determined by various factors, but in general, the closer the physical distance between the asynchronous system and the synchronous system is, the more reachability there is. In addition, the larger the transmission power of the wireless signal by the asynchronous system is, the more reachability there is.

The problems that can occur in a situation satisfying the above assumptions will be described later.

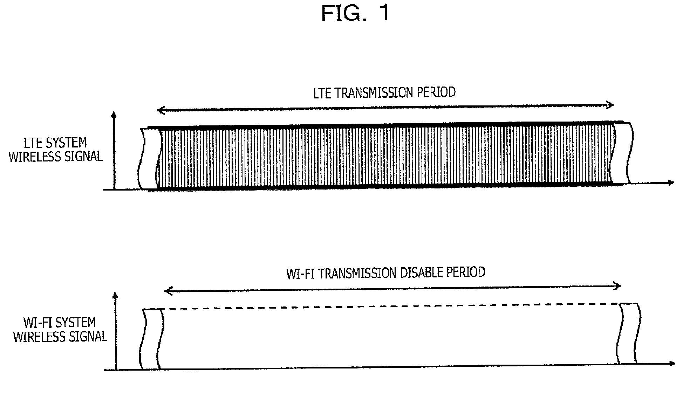

First, under the above assumptions, a case of operating the Wi-Fi system (asynchronous system) and the LTE system (synchronous system) is considered most simply. In this case, as illustrated in FIG. 1, basically, the LTE system continuously (in each sub-frame) performs communication. Although the base station is able to freely schedule the transmission timings of the data signal and control signal in the LTE system, if there is no bias in the transmission timing, a desirable result tends to be obtained with consideration of the throughput of the entire system, such that communication is usually performed continuously. In other words, some kind of wireless signal is transmitted in each sub-frame in the LTE system.

In this case, even if the terminal and the base station of the Wi-Fi system transmit a wireless signal at certain timing, a wireless signal which is transmitted by the Wi-Fi system causes interference in the LTE system. Thus, the Wi-Fi system is not able to transmit the wireless signal without causing interference in the LTE system. In other words, there is a problem that it is not possible to completely suppress interference between two coexisting secondary systems.

In addition, as described above, the terminal and the base station of the Wi-Fi system perform carrier sensing during the transmission of the wireless signal. In the case of FIG. 1, even if the terminal and the base station of the Wi-Fi system perform carrier sensing at a certain timing, a wireless signal which is transmitted by the LTE system is detected. Therefore, in the simplest coexistence as illustrated in FIG. 1, there is a problem that the Wi-Fi system does not have an opportunity to transmit a wireless signal.

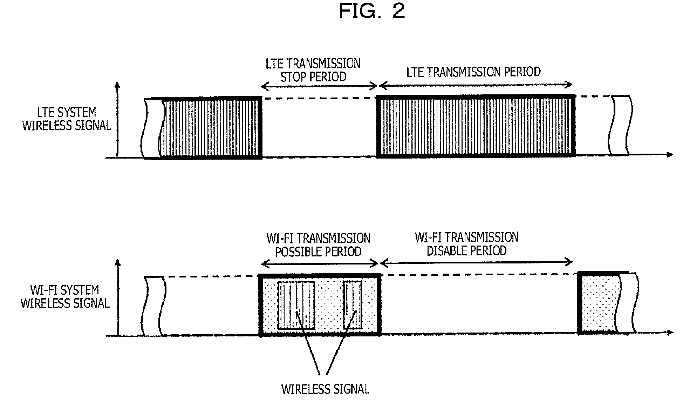

In order to solve these problems, as illustrated in FIG. 2, a period may be provided in which the LTE system (the synchronous system) stops the transmission of a wireless signal (a period when the transmission of the wireless signal is not performed). This period in this application is referred to as an LTE transmission stop period, but may be generally referred to as a gap period. The LTE transmission stop period may also be set in advance intermittently (periodically), and it does not matter that the LTE transmission stop period of a desired length may be set only when desired.

When the terminal of the Wi-Fi system or the like perform the carrier sensing in a period (an LTE transmission period in FIG. 2) other than an LTE transmission stop period by providing the LTE transmission stop period as illustrated in FIG. 2, a wireless signal by the LTE system is detected (in addition, for the Wi-Fi terminal, whether the detected signal at this time is a signal transmitted by the LTE system, or is a signal transmitted by other terminal of the Wi-Fi system or the like may not be determined in general). In this case, the terminal or the like of the Wi-Fi system postpones the transmission in order to avoid collision of the wireless signal. Thus, since the terminal or the like of the Wi-Fi system does not perform the transmission of the wireless signal in the transmission period of the LTE system, it is considered that the interference by the Wi-Fi system for the LTE system is suppressed.

On the other hand, when the terminal or the like of the Wi-Fi system performs the carrier sensing in the LTE transmission stop period, the wireless signal by the LTE system is not detected (further, it is assumed that the wireless signal by the other terminal or the like of the Wi-Fi system at this time is also not detected). In this case, since there is no possibility of collision of the wireless signal, the terminal or the like of the Wi-Fi system transmits the wireless signal. In other words, in the LTE transmission stop period, the terminal or the like of the Wi-Fi system can obtain the opportunity to transmit the wireless signal. Then, in this case, the terminal or the like of the Wi-Fi system can transmit the wireless signal without causing interference in the LTE system.

As described above with reference to FIGs. 1 and 2, by providing the LTE transmission stop period when the LTE system (synchronous system) does not perform transmission, the interference to the LTE system (synchronous system) by the Wi-Fi system (asynchronous system) is eradicated, and it also seems that the original purpose can be achieved.

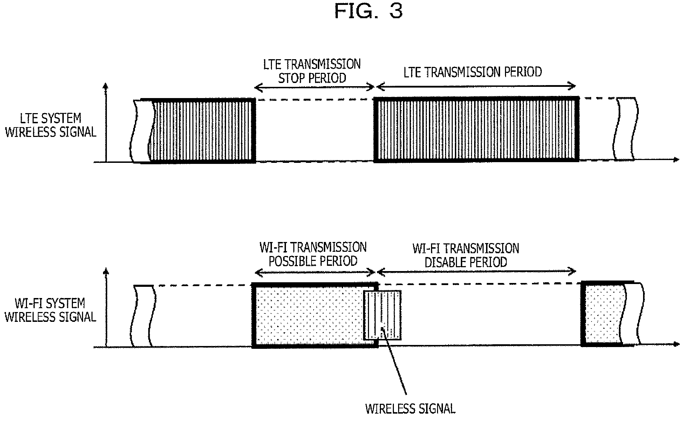

However, as in FIG. 2, even if the LTE system provides the LTE transmission stop period, it is considered that the interference problems remain. For example, as illustrated in FIG. 3, it is assumed that a relatively long wireless signal is transmitted immediately before the end of the LTE transmission stop period in the Wi-Fi system.

In this case, for the terminal or the like of the Wi-Fi system, since the transmission opportunity is obtained based on the carrier sensing at the time of the transmission start of the wireless signal (it is assumed that there is no collision with the other Wi-Fi terminal or the base station), the transmission of the wireless signal is started. However, as illustrated in FIG. 3, it is considered that the wireless signal is overflowed into the transmission period of the LTE system, beyond the LTE transmission stop period. Meanwhile, on the LTE system side, if the LTE transmission stop period ends, the transmission of the wireless signal is started, regardless of the transmission of the wireless signal by the Wi-Fi system.

When this occurs, a part of a wireless signal transmitted by the Wi-Fi system (a part that is overflowed into the transmission period of the LTE system) interferes with the LTE system. Since the period after the LTE transmission stop period is originally the transmission period by the LTE system, the signal transmitted by the LTE system is a desired signal, and the signal transmitted by the Wi-Fi system is an interference signal.

In addition, the length of the interference occurring in FIG. 3 varies, depending on the timing of the start of transmission by the Wi-Fi system and the length of the wireless signal. The length of the wireless signal varies depending on the size, the modulation method, and the encoding method of data. Therefore, since the length of the interference is not fixed, there is a problem that control is difficult.

To summarize the above, it is considered that the interference to the synchronous system by the asynchronous system is eradicated, by providing a period when the synchronous system does not perform transmission when the asynchronous systems which are a plurality of secondary systems and the synchronous system coexist in the white space cognitive radio. However, even in this case, since the wireless signal by the asynchronous system is overflowed into the transmission period beyond the transmission stop period of the synchronous system, there remains a problem that interference caused by the asynchronous system to the synchronous system partially occurs.

Here, although the problem of the interference occurring between the asynchronous systems which are a plurality of secondary systems and the synchronous system in the white space cognitive radio has been discussed as an example, it is noted that the same type of problem may also occur in other situations. More generally, (without being limited to white space cognitive radio) it is considered that the same type of problem may occur in a case where the asynchronous system can interfere with the synchronous system. Accordingly, it is noted that the application field of the technique of the present disclosure described later is not limited to the reduction of the interference occurring between the plurality of secondary systems which may interfere with each other in the white space cognitive radio.

Hereinafter, a description will be made regarding respective embodiments which solve the problems described above.

### [First embodiment]

A first embodiment is a higher conceptual embodiment which solves the problem described above. More specifically, the first embodiment is an embodiment relating to a wireless communication method of a wireless communication system including a synchronous system that performs synchronous wireless communication, and an asynchronous system that performs asynchronous wireless communication interfering with the synchronous system, in which a wireless terminal belonging to the asynchronous system acquires first information regarding a transmission stop period of a first wireless signal of the synchronous system, and the wireless terminal adjusts timing when the wireless terminal transmits a second wireless signal so as to suppress an overflow of the second wireless signal to a period subsequent to the transmission stop period, based on the first information.

First, the assumption of a first embodiment will be described. Since the assumption of the first embodiment is the same as the assumption described in the above "location of problem", it will be briefly described.

As the assumption of the first embodiment, it is assumed that a plurality of secondary systems coexist in the white space cognitive radio, one of two secondary systems is a synchronous system, and the other is an asynchronous system. Here, as an example, it is assumed that the synchronous system is an LTE system, and the asynchronous system is a Wi-Fi system. Of course, it goes without saying that it is possible to apply each embodiment of the present application to a combination of any the other synchronous system and asynchronous system.

Further, it is assumed that the asynchronous system can interfere with the synchronous system. In other words, it is assumed that the frequency band used by the asynchronous system and the frequency band used by the synchronous system conflict, and the wireless signal of the asynchronous system reaches the synchronous system.

Here, although the problem of the interference occurring between the asynchronous systems which are a plurality of secondary systems and the synchronous system in the white space cognitive radio has been discussed as an example, in the first embodiment and the subsequent respective embodiments, it is noted that the same type of problem may also occur in other situations. More generally, (without being limited to white space cognitive radio) it is considered that the same type of problem may occur in a case where the asynchronous system can interfere with the synchronous system. Accordingly, it is noted that the applicable field of each embodiment of the present application is not limited to the reduction of the interference occurring between the plurality of secondary systems which may interfere with each other in the white space cognitive radio.

Next, as a further assumption in the first embodiment, it is assumed that a period when the transmission of the wireless signal is stopped (a period when the transmission of the wireless signal is not performed) is set in the LTE system, similar to FIG. 2 and FIG. 3. The period corresponds to the LTE transmission stop period (gap period) described above. The LTE transmission stop period may also be set in advance intermittently (periodically), and the LTE transmission stop period of a desired length may be set only when desired. Further, the LTE transmission stop period may also be set autonomously (voluntarily) by the LTE system, and it does not matter that the LTE transmission stop period may be set by the Wi-Fi system, or the LTE system in response to a request from a third party.

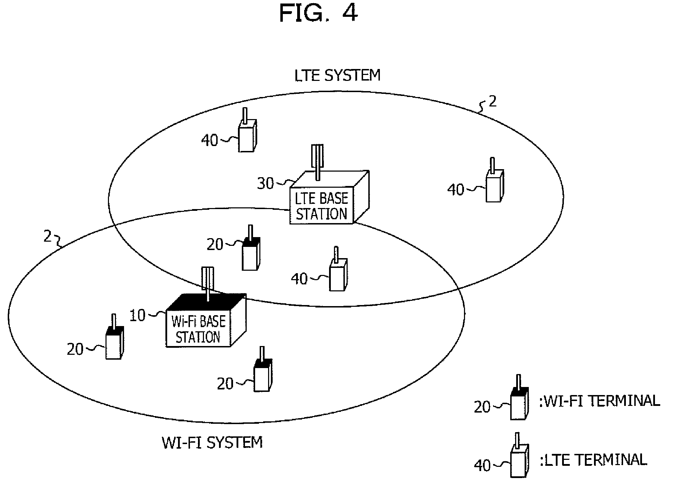

FIG. 4 is a diagram illustrating a system configuration of the first embodiment.

A Wi-Fi system 1 (asynchronous system 1) illustrated in FIG. 4 includes a single base station (asynchronous base station 10), and one or more terminals (asynchronous terminals 20). In the present application, the base station (asynchronous base station 10) of the Wi-Fi system 1 is referred to as a Wi-Fi base station 10, and the terminal (asynchronous terminal 20) of the Wi-Fi system 1 is referred to as the Wi-Fi terminal 20. In addition, in general, the Wi-Fi base station 10 is often referred to as a (Wi-Fi) access point.

The LTE system 2 (synchronous system 2) illustrated in FIG. 4 includes a single base station (synchronous base station 30), and one or more terminals (synchronous terminals 40). In the present application, the base station (synchronous base station 30) of the LTE system 2 is referred to as an LTE base station 30, and the terminal (synchronous terminal 40) of the LTE system 2 is referred to as the LTE terminal 40. In addition, in general, the LTE base station 30 is often referred to as an evolved NodeB (eNB), and the LTE terminal 40 is often referred to as user equipment (UE).

In the Wi-Fi system 1 illustrated in FIG. 4, the Wi-Fi base station 10 and the Wi-Fi terminal 20 can perform wireless communication with each other asynchronously. In the LTE system 2, the LTE base station 30 and the LTE terminal 40 can perform wireless communication with each other synchronously. Since the asynchronous transmission of the Wi-Fi system 1 and the synchronous transmission of the LTE system 2 are as described in the above "location of problem", a description thereof will not be repeated here. It is assumed that the Wi-Fi base station 10 and the LTE base station 30 in FIG. 4 can communicate with each other through a wired network and the like on the network side.

Hereinafter, the case where the Wi-Fi terminal 20 in the first embodiment performs wireless transmission will be described. Since the operation in the case where the Wi-Fi base station 10 in the first embodiment performs wireless transmission may be substantially similar to the operation of the Wi-Fi terminal 20, a description thereof will not be repeated (which is the same in the following embodiments).

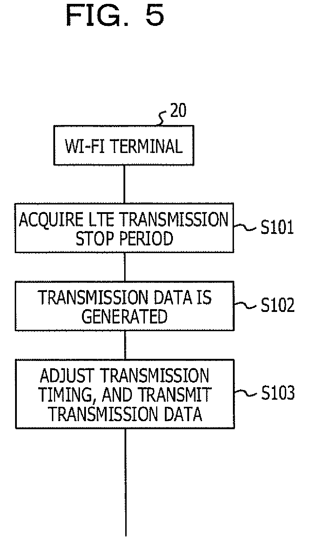

FIG. 5 is a diagram illustrating an example of a processing sequence when the Wi-Fi terminal 20 according to the first embodiment performs the wireless transmission.

In S101 of FIG. 5, the Wi-Fi terminal 20 acquires information about the transmission stop period of the LTE system 2. Here, it is of course that information regarding the transmission stop period of the LTE system 2 (hereinafter, for convenience, referred to as the transmission stop period information) may be information indicating directly the transmission stop period of the LTE system 2, and may also be information indicating indirectly the transmission stop period of the LTE system 2.

The transmission stop period information, for example, can be set as information pieces respectively indicating the start timing and the length of the transmission stop period of the LTE system 2. Further, information pieces respectively indicating the start timing and the end timing of the transmission stop period can be set as the transmission stop period information. When the transmission stop period is set intermittently (periodically), for example, the transmission stop period information can be set as information pieces respectively indicating the start timing, the length and the cycle (of the first period) of the transmission stop period. Although the example of the transmission stop period information indicated here corresponds to the information indicating directly the transmission stop period of the LTE system 2, indirect information generated based on these pieces of information and the other types of information may be set as transmission stop information.

Further, in S101, the Wi-Fi terminal 20 may acquire the transmission stop period information by using any method. For example, the Wi-Fi terminal 20 can acquire the transmission stop period information, by receiving the transmission stop period information from the Wi-Fi base station 10. Further, the Wi-Fi terminal 20 can acquire (generate) the transmission stop period information, by detecting the LTE transmission stop period, through monitoring the wireless signal transmitted from the LTE system 2, or the like. Further, when the Wi-Fi terminal 20 has a function of the LTE terminal 40 (corresponding to a dual terminal of Wi-Fi and LTE), it is possible to acquire the transmission stop period information by receiving the transmission stop period information from the LTE base station 30. In this case, the LTE base station 30 can transmit the transmission stop period information while being included in, for example, a broadcast signal or a paging signal.

Next, in S102, it is assumed that transmission data is generated in the Wi-Fi terminal 20. Here, the transmission data means information that the terminal of the Wi-Fi system 1 intends to transmit, and may not only be so-called user data (application data) but also control information or the like of the lower layer. For example, when accessing a Web server on the Internet through the Wi-Fi base station 10 from the Wi-Fi terminal 20, transmission data (an HTTP request and the like) is generated in the Wi-Fi terminal 20. Further, when the Wi-Fi terminal 20 transmits control information for authentication to the Wi-Fi base station 10, transmission data is generated.

Next, in S103, the Wi-Fi terminal 20 transmits the wireless signal including the transmission data. In this case, the Wi-Fi terminal 20 adjusts timing when transmitting a wireless signal so as to suppress an overflow of the wireless signal into a period subsequent to the LTE transmission stop period, based on the transmission stop period information. This adjustment is referred to as transmission timing adjustment in the present application.

Various methods are considered for the transmission timing adjustment. For example, it is considered that the Wi-Fi terminal 20 realizes the transmission timing adjustment by adjusting the transmission timing such that the transmission is completed up to the end timing of the LTE transmission stop period indicated by the transmission stop period information. More specifically, for example, a method is considered which determines whether or not the transmission of the wireless signal including the transmission data is completed up to the end timing of the LTE transmission stop period; performs transmission, when the transmission is completed; and performs transmission in the next LTE transmission stop period, when the transmission is not completed. Further, a method is considered which divides the transmission data, when the transmission is not completed; transmits the wireless signal of the amount that can be completely transmitted up to the end timing of the LTE transmission stop period, in the LTE transmission stop period; and transmits the rest in the subsequent LTE transmission stop periods.

As long as the transmission timing adjustment adjusts timing when transmitting a wireless signal, so as to suppress an overflow of the wireless signal into a period subsequent to the LTE transmission stop period, based on the transmission stop period information, it is possible to use any method without being limited to the method described here. In addition, since it is preferable to suppress an overflow of the wireless signal into a period subsequent to the LTE transmission stop period, it is noted that not only a method in which the overflow becomes useless and but also a method of reducing the length or the frequency of the overflow as compared to the case of not performing any adjustment corresponds to the transmission timing adjustment in the present application.

According to the first embodiment described above, it is possible to solve the problems described in the "location of problem". In other words, according to the first embodiment, when the asynchronous systems 1 (Wi-Fi systems 1) which are a plurality of secondary systems and the synchronous system 2 (LTE system 2) coexist in the white space cognitive radio, it is possible to suppress an overflow of the wireless signal by the asynchronous system 1 into the transmission period beyond the transmission stop period of the synchronous system 2. As described above, since the application of the first embodiment is not limited to the white space cognitive radio, more generally, it is possible to suppress an overflow of the wireless signal by the asynchronous system 1 causing interference, into the transmission period, beyond the transmission stop period of the synchronous system 2. Thus, the first embodiment is configured to exhibit an effect in which it is possible to suppress the interference caused by the overflow of the wireless signal by the asynchronous system 1 into the transmission period, beyond the transmission stop period of the synchronous system 2, which was not achieved in the related art.

### [Second embodiment]

Next, a second embodiment will be described. The second embodiment corresponds to one embodiment of the lower concept of the first embodiment. The second embodiment is configured in such a manner that the Wi-Fi base station 10 (asynchronous base station 10) instructs the Wi-Fi terminal 20 (asynchronous terminal 20) to adjust the transmission timing, based on the LTE transmission stop period information, so as to suppress the interference with the LTE system 2 (synchronous system 2).

Since the assumption of the second embodiment is the same as the assumption described in the above "location of problem" and the first embodiment, a description thereof will not be repeated here.

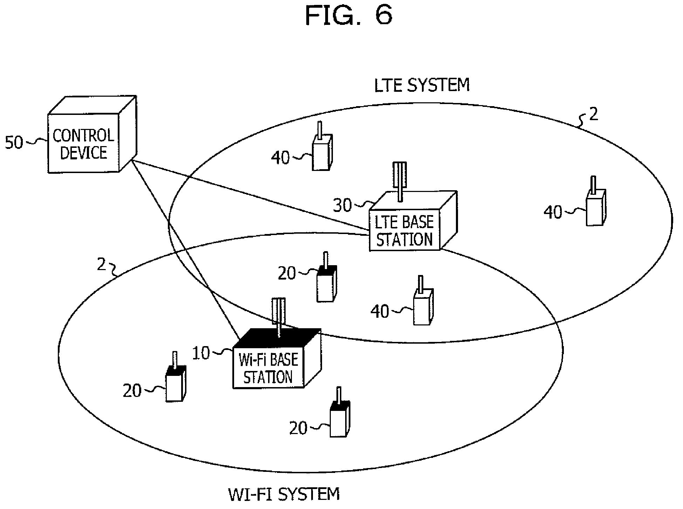

FIG. 6 is a diagram illustrating a system configuration in the second embodiment. Since a Wi-Fi system 1 (asynchronous system 1) and an LTE system 2 (synchronous system 2), which are illustrated in FIG. 6, are as described in the first embodiment, a description thereof will not be repeated here.

A control device 50 is present in the system configuration of the second embodiment illustrated in FIG. 6. The control device 50 is a third-party device that neither belongs to the Wi-Fi system 1 nor to the LTE system 2. It can be said that the control device 50 is a device with a function equivalent to the coexistence manager (CM), if referring to the IEEE 802.19 standard specification.

The control device 50 can acquire various types of information regarding each wireless communication system (secondary system) using the white space of the TV system (primary system). This information is stored in an external or internal data base, and is updated as occasion calls. It is assumed that the information contains, for example, the frequency band (channel) used by each secondary system, the position and transmission power of the base station, a wireless communication scheme, and the like.

The control device 50 illustrated in FIG. 6 recognizes the presence of the Wi-Fi system 1 and the LTE system 2, using the database, but does not recognize whether they interfere with each other. Further, the control device 50 is assumed to be able to communicate with the Wi-Fi base station 10 and the LTE base station 30 with each other through a wired network on the network side.

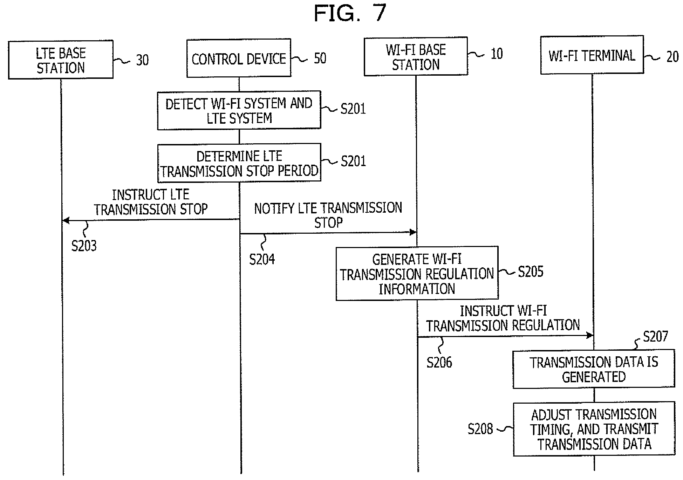

FIG. 7 is a diagram illustrating an example of a processing sequence when the Wi-Fi terminal 20 in the second embodiment performs the wireless transmission.

In S201 of FIG. 7, the control device 50 detects a set of the asynchronous system 1 and the synchronous system 2 having a possibility that interference occurs.

The control device 50 performs the detection, based on the information registered in the database described above. For example, this will be performed as follows. First, the frequency bands (channels) which are used by respective secondary systems are acquired from the database, and a set of secondary systems having a possibility that interference occurs are extracted in view a frequency. Next, the position and the transmission power of the base station are obtained from the database, for the set of the extracted secondary systems, and whether there is a possibility of interference is determined in view of the reachability of the wireless signal (coverage) of the wireless signal. For the set of the secondary systems which are determined to have a possibility of interference in view of the frequency and the reachability of a wireless signal, whether one is a synchronous wireless communication scheme and the other is an asynchronous wireless communication scheme is determined, with reference to a wireless communication scheme.

Through the above process, the control device 50 is capable of detecting a set of the asynchronous system 1 and the synchronous system 2 having a possibility that interference occurs. It is assumed that the control device 50 in this embodiment detects, for example, a set of the Wi-Fi system 1 and the LTE system 2, as a set of the asynchronous system 1 and the synchronous system 2 having a possibility that interference occurs.

In S202 of FIG. 7, the control device 50 determines the transmission stop period (LTE transmission stop period) of the LTE system 2. In this embodiment, as an example, it is assumed that the transmission stop period of the LTE system 2 is intermittent (periodic). However, similar to the first embodiment, it is noted that the transmission stop period of the LTE system 2 in this embodiment may not be periodic.

The control device 50 can determine the LTE transmission stop period, based on any rule. Hereinafter, an example will be described. For example, when the number of wireless terminals in each wireless communication system has been registered in the database of the secondary system, the control device 50 can determine the ratio of the transmission stop period of the LTE system 2 in each period, based on the ratio between the numbers of respective wireless terminals of the Wi-Fi system 1 and the LTE system 2 which are detected in S201. As a specific example, if the ratio between the numbers of terminals of the Wi-Fi system 1 and the LTE system 2 is 1:3, the LTE transmission stop period can be set as a ratio of 1/4 of the entire period. Next, the control device 50 determines the length of the LTE transmission stop period, and the period of the LTE transmission stop period, based on the ratio of the LTE transmission stop period that is determined in advance. In addition, the control device 50 appropriately determines the start timing of the LTE transmission stop period. As a specific example using a numerical value, the length of the LTE transmission stop period can be determined as 500 milliseconds (corresponding to 500 subframes in the LTE system 2. In addition, 10 subframes corresponds to one frame), the cycle of the LTE transmission stop period can be determined as 2000 milliseconds (corresponding to 2000 subframes), and the start timing of the LTE transmission stop period can be determined as 1000 milliseconds (corresponding to 1000 subframes).

In S203 of FIG. 7, the control device 50 transmits an instruction to perform the transmission stop in the LTE transmission stop period, to the LTE base station 30. In this case, the control device 50 transmits the information indicating the LTE transmission stop period to the LTE base station 30, in response to the instruction. Here, the information indicating the LTE transmission stop period is, for example, the length, the cycle, and the start timing of the LTE transmission stop period, which are determined in S202.

The instruction in S203 is realized by the control device 50 transmitting a transmission control message to the LTE base station 30. The control message may be transmitted from the control device 50 to the LTE base station 30 through another device such as a management device (MME: mobility management entity) belonging to the LTE system 2. As the control message, for example, those conforming to the IEEE 802.19 standard specification can be used.

Next, in S204 of FIG. 7, the control device 50 transmits an instruction to perform the transmission in the LTE transmission stop period, to the Wi-Fi base station 10. In this case, the control device 50 transmits the information indicating the LTE transmission stop period to the Wi-Fi base station 10, in response to the instruction. Since S204 can be performed in the same manner as S203 (only destination is different), the description thereof will not be repeated.

Next, in S205 of FIG. 7, the Wi-Fi base station 10 generates information (hereinafter, for convenience, referred to as Wi-Fi transmission regulation information) indicating performing a certain transmission regulation for the Wi-Fi terminal 20, based on the information received in S204.

It is assumed that the Wi-Fi transmission regulation information includes information on timing when the Wi-Fi terminal 20 is capable of transmitting the wireless signal, or information on timing when the Wi-Fi terminal 20 is not capable of transmitting the wireless signal. Since these types of information are not inherently different, hereinafter, a case of including the information on timing when the Wi-Fi terminal 20 is capable of transmitting the wireless signal will be described.

Here, since the length of transmission of the wireless signal is the length (width) on the transmission time axis, timing when the Wi-Fi terminal 20 transmits a wireless signal can be designated based on start timing or end timing of the transmission of the wireless signal.

For example, the Wi-Fi transmission regulation information may include information indicating a period from which timing of the start of transmission by the Wi-Fi terminal 20 can be acquired. In the present application, this period is assumed to be referred to as a Wi-Fi transmission start permission period. The Wi-Fi transmission start permission period may be a period excluding a period subsequent to a predetermined timing from the LTE transmission stop period.

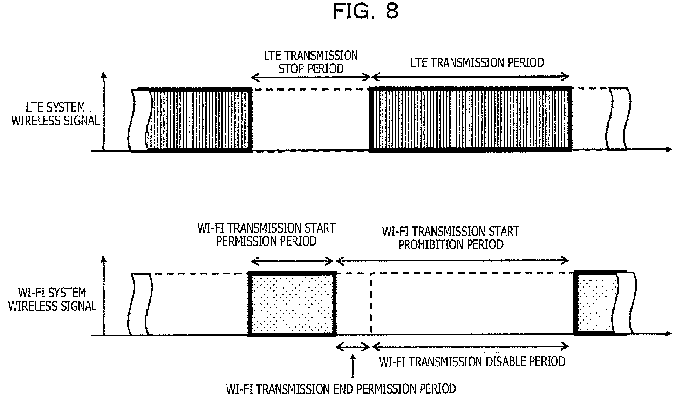

FIG. 8 is a diagram illustrating a relationship between the LTE transmission stop period and the Wi-Fi transmission start permission period. As illustrated in FIG. 8, the Wi-Fi transmission end permission period is a period excluding a period subsequent to a predetermined timing from the LTE transmission stop period. Here, a period subsequent to a predetermined timing in the LTE transmission stop period is referred to a Wi-Fi transmission end permission period. In addition, since a LTE transmission period when LTE transmission is available is "period when the Wi-Fi system 1 may not perform transmission", in the present application, it is assumed that the LTE transmission period is referred to as a Wi-Fi transmission disable period. As illustrated in FIG. 8, it is assumed that the period of a combination of the Wi-Fi transmission end permission period and the Wi-Fi transmission disable period is referred to as a Wi-Fi transmission start prohibition period.

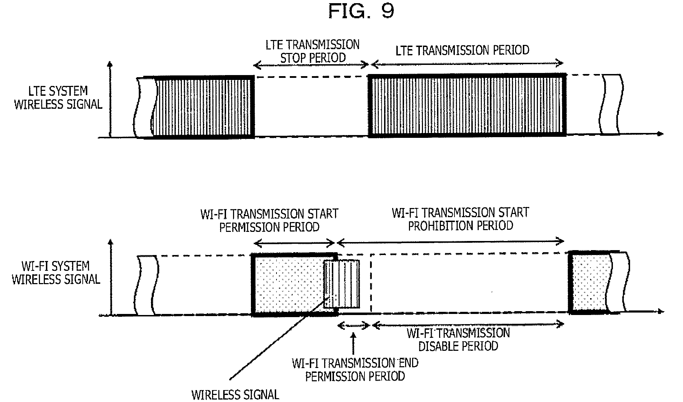

Here, the Wi-Fi transmission end permission period is described as a period when the end of the wireless signal by the Wi-Fi system 1 is permitted but the start thereof is not permitted. The Wi-Fi transmission end permission period is provided so as to suppress the occurrence of interference caused by an overflow of wireless transmission by the Wi-Fi terminal 20 into the transmission period of the LTE system 2. The Wi-Fi terminal 20 in the present embodiment does not uniformly start the transmission of the wireless signal in the LTE transmission stop period, and does not start the transmission in the Wi-Fi transmission end permission period but rather starts the transmission only in the Wi-Fi transmission start permission period. Thus, as illustrated in FIG. 9, it is possible to suppress the occurrence of interference caused by an overflow of the wireless transmission by the Wi-Fi terminal 20 into the transmission period of the LTE system 2.

In addition, it is needless to say that the Wi-Fi terminal 20 may not start the transmission of the wireless signal in the Wi-Fi transmission disable period which is the LTE transmission period. Therefore, as illustrated in FIG. 8, it is also noted that the Wi-Fi terminal 20 in the present embodiment does not start the transmission in the Wi-Fi transmission start prohibition period (Wi-Fi transmission end permission period + Wi-Fi transmission disable period), and starts the transmission only in the Wi-Fi transmission start permission period.

Here, if the Wi-Fi transmission end permission period is long, the possibility of the occurrence of the interference is reduced, but the period when asynchronous communication is available is also reduced, resulting in a decrease in a transmission efficiency of the Wi-Fi system 1. Meanwhile, if the Wi-Fi transmission end permission period is short, there is a possibility that the occurrence of the interference may not be sufficiently suppressed. Therefore, the length of the Wi-Fi transmission end permission period is considered desirable to set as a length so as to sufficiently suppress the interference, and as short as possible.

It is possible to set the length of the Wi-Fi transmission end permission period to, for example, a theoretical maximum value of the length of the wireless signal that the Wi-Fi terminal 20 is capable of transmitting, in view of the wireless communication scheme (here, Wi-Fi). In general, a maximum packet length, a modulation scheme and an encoding scheme having the lowest transmission rate, and the like are defined on the standard, in the wireless communication scheme. Therefore, it is possible to determine the theoretical maximum value of the length of the wireless signal that the Wi-Fi terminal 20 can transmit, based on the standard.

Further, it is considered that the Wi-Fi transmission end permission period is set based on a result from measuring the wireless signal that the Wi-Fi terminal 20 has actually transmitted for a predetermined period. As an example, it is considered that the Wi-Fi transmission end permission period is set to the length of the longest wireless signal that has been measured. Further, the Wi-Fi transmission end permission period may be set to the average value of all of the measured wireless signals, or a value obtained by multiplying the average value by a predetermined coefficient (for example, two). A predetermined rate (for example, 90%) of all of the measured wireless signals may be set to a length such as not to interfere with the LTE system 2. Further, when the Wi-Fi transmission end permission period is set based on the measured result, there is a possibility that it is not possible to completely remove the overflow of the wireless transmission by the Wi-Fi terminal 20 into the transmission period of the LTE system 2, but it is considered that the overflow is removed to some extent. Therefore, it is considered that it is possible to suppress the interference generated due to the overflow, to some extent.

When the LTE transmission stop period is given, if the Wi-Fi transmission end permission period is determined, it is possible to obtain the Wi-Fi transmission start permission period. The Wi-Fi transmission start permission period is a period excluding the Wi-Fi transmission end permission period from the LTE transmission stop period, as illustrated in FIG. 8. One number of time of the Wi-Fi transmission start permission period can be represented by the start timing and a period length. If the LTE transmission stop period is intermittent (periodic), the Wi-Fi transmission start permission period is also intermittent (periodic). The Wi-Fi transmission start permission period in this case can be represented by start timing, a period length, and a cycle.

In S205, the Wi-Fi base station 10 generates Wi-Fi transmission regulation information regarding the Wi-Fi transmission end permission period or the like determined in the manner described or the like. Incidentally, since the Wi-Fi transmission regulation information is information for regulating the transmission of the Wi-Fi terminal 20, it is necessarily generated based on the LTE transmission stop period. In other words, it is difficult in principle to generate the Wi-Fi transmission regulation information independently of the LTE transmission stop period. Thus, the Wi-Fi transmission regulation information is understood to correspond to the information regarding the LTE transmission stop period.

Next, in S206 of FIG. 7, the Wi-Fi base station 10 transmits the Wi-Fi transmission regulation information generated in S205, to the Wi-Fi terminal 20. In this case, the Wi-Fi base station 10 adjusts the transmission timing so as to complete the transmission of the wireless signal including the Wi-Fi transmission regulation information within the LTE transmission stop period. In S205, the Wi-Fi terminal 20 receives the wireless signal including the Wi-Fi transmission regulation information transmitted by the Wi-Fi base station 10.

Transmission data is generated in the Wi-Fi terminal 20 in S207 of FIG. 7. Since S207 is similar to S102 of FIG. 5, a description thereof will not be repeated here.

In S208 of FIG. 7, the Wi-Fi terminal 20 transmits the wireless signal including the transmission data at timing that is adjusted based on the Wi-Fi transmission regulation information received in S206.

For example, when the Wi-Fi transmission regulation information indicates the Wi-Fi transmission start permission period, the Wi-Fi terminal 20 adjusts the transmission timing so as to start the transmission of the wireless signal including transmission data in the Wi-Fi transmission start permission period. In other words, the Wi-Fi terminal 20 adjusts the transmission timing so as not to start the transmission of the wireless signal including transmission data in a period (Wi-Fi transmission start prohibition period illustrated in FIG. 8) other than the Wi-Fi transmission start permission period. In a period other than the Wi-Fi transmission start permission period, the Wi-Fi terminal 20 having transmission data adjusts the transmission timing so as to stand by the start of the transmission of the wireless signal including transmission data until the next Wi-Fi transmission start permission period.

According to the second embodiment described above, it is possible to solve the problems described in the "location of problem", similar to the first embodiment. In other words, according to the second embodiment, when the asynchronous systems 1 (Wi-Fi systems 1) which are a plurality of secondary systems and the synchronous system 2 (LTE system 2) coexist in the white space cognitive radio, it is possible to suppress an overflow of the wireless signal by the asynchronous system 1 into the transmission period, beyond the transmission stop period of the synchronous system 2. As described above, since the application of the second embodiment is not limited to the white space cognitive radio, more generally, it is possible to suppress an overflow of the wireless signal by the asynchronous system 1 causing interference, into the transmission period, beyond the transmission stop period of the synchronous system 2. Thus, the second embodiment is configured to exhibit an effect that it is possible to suppress the interference caused by the overflow of the wireless signal by the asynchronous system 1 into the transmission period, beyond the transmission stop period of the synchronous system 2, which was not achieved in the related art.

### [Third embodiment]

Next, a third embodiment will be described. The third embodiment also corresponds to one embodiment of the lower concept of the first embodiment. The third embodiment is configured in such a manner that the Wi-Fi terminal 20 (asynchronous terminal 20) adjusts the transmission timing, based on the LTE transmission stop period information, so as to suppress the interference with the LTE system 2 (synchronous system 2).

The third embodiment has a lot in common with the second embodiment. Therefore, the following description will focus on those in the third embodiment different from the second embodiment.

Since the assumption of the third embodiment is the same as the assumption described in the above "location of problem" and each embodiment, a description thereof will not be repeated here. Since the system configuration of the third embodiment is the same as that of the second embodiment illustrated in FIG. 6, a description thereof will not be repeated.

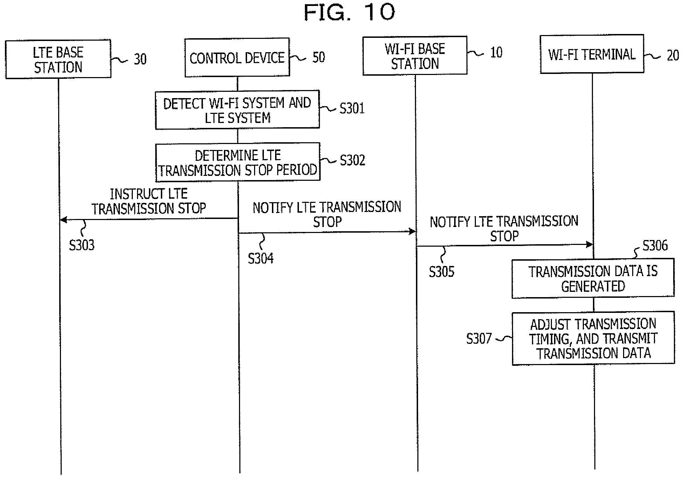

FIG. 10 is a diagram illustrating an example of a processing sequence when the Wi-Fi terminal 20 in the third embodiment performs wireless transmission.

Since S301 to S304 of FIG. 10 may be performed in the same manner as S201 to S204 of FIG. 7 according to the second embodiment, a description thereof will not be repeated here.

Next, in S305 of FIG. 10, the Wi-Fi base station 10 transmits the transmission stop period information received in S304, to the Wi-Fi terminal 20. In other words, the Wi-Fi base station 10 transfers the transmission stop period information. In S305, the Wi-Fi terminal 20 receives the transmission stop period information transmitted (transferred) by the Wi-Fi base station 10.

The Wi-Fi base station 10 may transfer the transmission stop information as it is, in S305, but may transfer the transmission stop period information by adding or deleting a predetermined type of information, to the Wi-Fi terminal 20. In addition, it is assumed that the Wi-Fi base station 10 adjusts the transmission timing so as to complete the transmission of the wireless signal including the transmission stop period information within the LTE transmission stop period.

Transmission data is generated in the Wi-Fi terminal 20 in S306.

Since S306 is similar to S102 of FIG. 5 and S207 of FIG. 7, a description thereof will not be repeated here.

In S307, the Wi-Fi terminal 20 transmits the wireless signal including the transmission data, at timing adjusted based on the transmission stop period information received in S305. Here, some methods are conceivable for the timing adjustment that the Wi-Fi terminal 20 performs, but for example, the timing adjustment can be performed as follows,

As examples of an implementation method of timing adjustment of S307, it is considered that the Wi-Fi terminal 20 adjusts the transmission timing so as to complete the transmission of the wireless signal until the end timing of the LTE transmission stop period indicated by the transmission stop period information. More specifically, for example, a method is considered which determines whether or not the transmission the wireless signal including the transmission data is completed until the end timing of the LTE transmission stop period (for convenience, referred to as a transmission availability determination), performs the transmission when the transmission has been completed, and performs the transmission in the next transmission period when the transmission has not been completed. In addition, a method is considered which splits transmission data when the transmission has not been completed, transmits only data for which transmission has been completed until the end timing of the LTE transmission stop period, in the transmission period, and transmits remaining data in the subsequent LTE transmission stop period.

Here, the transmission availability determination described above can be performed based on the lengths of the transmission stop period information received in S305 and the wireless signal including the transmission data generated in S306. First, the end timing of the LTE transmission stop period is obtained from the transmission stop period information. If the start timing of the LTE transmission stop period and the transmission period length are included in the transmission stop period information, it is possible to obtain the end timing of the LTE transmission stop period, by adding the transmission period length to the start timing. In addition, if the LTE transmission stop period is intermittent (periodic), it is possible to obtain the end timing of the LTE transmission stop period, by adding the integer multiple of the cycle of the LTE transmission stop period included in the transmission stop period information.

Next, it is determined whether a difference between the obtained end timing of the LTE transmission stop period and the Wi-Fi transmission start scheduled timing is the length of the wireless signal including the transmission data or more. Here, the Wi-Fi transmission start scheduled timing is the timing at which the Wi-Fi terminal 20 is scheduled to start transmission of the wireless signal, and basically parameters that can be arbitrarily determined by the Wi-Fi terminal 20. However, it is noted that the Wi-Fi transmission start scheduled timing has to be included in the LTE transmission stop period.

For ease of understanding, a specific numerical example will be described. Here, it is considered a case where the Wi-Fi transmission start scheduled timing is time later 100 msec from the current time, and the end timing of the LTE transmission stop period is time later 300 msec from the current time. In this case, if the length of the wireless signal including the transmission data is 150 msec, 200 msec (=300 msec - 100 msec) which is a difference between the end timing of the LTE transmission stop period and the Wi-Fi transmission start scheduled timing is 150 msec or more, such that the result of the transmission availability determination is "transmission possible". Meanwhile, since the length of the wireless signal including the transmission data is 250 msec, 200 msec is less than 250 msec, such that the result of the transmission availability determination "transmission impossible".

In S307, when the result of the transmission availability determination is "transmission possible", the Wi-Fi terminal 20 adjusts the transmission timing so as to start the transmission of the wireless signal including the transmission data in the Wi-Fi transmission start scheduled timing. Meanwhile, when the result of the transmission availability determination is "transmission impossible", the Wi-Fi terminal 20 adjusts the transmission timing so as not to start the transmission of the wireless signal including the transmission data in the Wi-Fi transmission start scheduled timing. In the latter case, the Wi-Fi terminal 20 with transmission data adjusts the timing, for example, so as to wait for transmission start of the wireless signal including the transmission data until the next LTE transmission stop period.

According to the third embodiment described above, it is possible to solve the problems described in the "location of problem", similar to each embodiment described above. In other words, according to the third embodiment, when the asynchronous systems 1 (Wi-Fi systems 1) which are a plurality of secondary systems and the synchronous system 2 (LTE system 2) coexist in the white space cognitive radio, it is possible to suppress an overflow of the wireless signal by the asynchronous system 1 into the transmission period, beyond the transmission stop period of the synchronous system 2. As described above, since the application of the third embodiment is not limited to the white space cognitive radio, more generally, it is possible to suppress an overflow of the wireless signal by the asynchronous system 1 causing interference, into the transmission period, beyond the transmission stop period of the synchronous system 2. Thus, the third embodiment is configured to exhibit an effect that it is possible to suppress the interference caused by the overflow of the wireless signal by the asynchronous system 1 into the transmission period, beyond the transmission stop period of the synchronous system 2, which was not achieved in the related art.

### [Fourth embodiment]

The fourth embodiment corresponds to a modification example of the second embodiment and the third embodiment. The fourth embodiment is intended to suppress the interference by not the control device 50, but the Wi-Fi base station 10 or the like detecting the interference from the LTE system 2.

The fourth embodiment has a lot in common with the second embodiment and the third embodiment. Therefore, the following description will focus on those different from these embodiments in the fourth embodiment.

Since the assumption of the fourth embodiment is the same as the assumptions described in the above "location of problem" and each embodiment, a description thereof will not be repeated here. Since the system configuration of the fourth embodiment is the same as that of the second embodiment illustrated in FIG. 6, a description thereof will not be repeated.

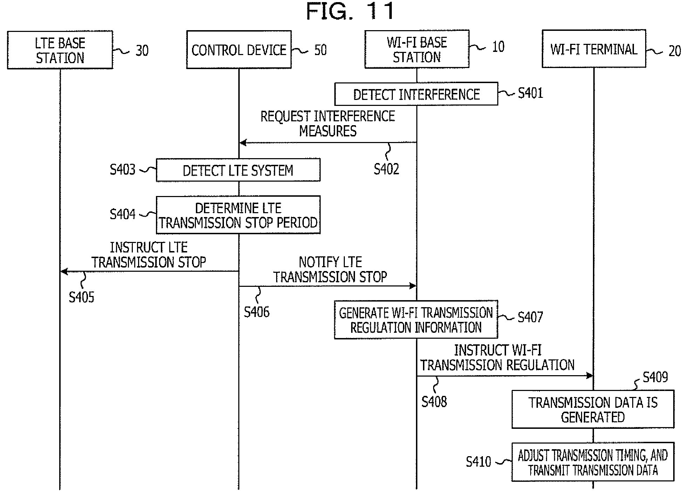

FIG. 11 is a diagram illustrating an example of a processing sequence when the Wi-Fi terminal 20 according to the fourth embodiment performs the wireless transmission.

In S401 of FIG. 11, the Wi-Fi base station 10 detects the interference received from the LTE system 2. Here, the Wi-Fi base station 10 does not have to specify an interference source, and may detect reception of interference from some other wireless communication systems.

The detection of the interference can be performed by using any method. For example, it is possible to detect the interference received from the LTE system 2, based on the incidence of collisions in the carrier sensing performed by the Wi-Fi base station 10 during transmission. In this case, when the collision rate is equal to or greater than a predetermined value in a predetermined period, the interference from the LTE system 2 can be assumed to be detected (recognized as being detected). In another example, the interference may be detected based on a transmission success rate (for example, ACK reception rate) or the like. Further, the interference may be detected based on channel characteristics and the like obtained from the received wireless signal.

Further, in S401, the Wi-Fi base station 10 not only detects the interference, but also may measure (estimate) the size of the interference. For example, it is possible to estimate the size of the interference according to the size of the collision rate in the carrier sensing.

Next, in S402 of FIG. 11, the Wi-Fi base station 10 makes a request (demands) for interference measures to the control device 50, based on the interference detected in S401. In this case, the Wi-Fi base station 10 may notify the control device 50 of information on the size of the interference received from the LTE system 2 and the information on other interferences.

S402 is performed by the Wi-Fi base station 10 transmitting a control message to the control device 50. For example, it is possible to use the control message conforming to the IEEE 802.19 standard specification.

Next, in S403 of FIG. 11, the control device 50 detects a synchronous system 2 having a possibility of causing interference in the Wi-Fi system 1.

The detection of the synchronous system 2 in S403 can be performed according to S201 of FIG. 7 according to the second embodiment. Whereas the detection of the asynchronous system 1 is also performed in S201 of FIG. 7 according to the second embodiment, it is noted that the asynchronous system 1 is default (the Wi-Fi system 1 that requested the interference measures in S402) in S403 of FIG. 11 according to this embodiment.

Next, in S404 of FIG. 11, the control device 50 determines the transmission stop period (LTE transmission stop period) of the LTE system 2. The determination of the LTE transmission stop period in S404 can be performed by S202 of FIG. 7 according to the second embodiment. However, when the information on the size of the interference is obtained in S402, the control device 50 may determine the LTE transmission stop period based on the size of the interference in S404.

S405 to S410 of FIG. 11 may be performed in the same manner as S203 to S208 of FIG. 7 according to the second embodiment. In addition, the process of S405 to S410 of FIG. 11 may be performed in the same manner as S303 to S307 of FIG. 10 according to the third embodiment. In any case, since a description thereof is identical with the description of the each embodiment described above, here a description thereof will not be repeated.

Although the basic configuration of the fourth embodiment is described above, some modification examples for the fourth embodiment are considered, and thus they will be described later.

In the basic configuration of the fourth embodiment, the Wi-Fi base station 10 alone detects the interference received from the LTE system 2. However, the Wi-Fi base station 10 may detect the interference received from the LTE system 2, in association with the Wi-Fi terminal 20. For example, the Wi-Fi base station 10 collects the collision rates in the carrier sensing during the transmission by each Wi-Fi terminal 20, and can detect the interference received from the LTE system 2, based on the collision rates and the collision rate of the Wi-Fi base station 10.

Further, the Wi-Fi terminal 20 may detect the interference received from the LTE system 2. For example, it is considered that the Wi-Fi terminal 20 detects the interference, based on the collision rates in the carrier sensing during the transmission, and notifies the Wi-Fi base station 10 of the detected interference. In this case, one Wi-Fi terminal 20 alone may detect the interference, or a plurality of Wi-Fi terminals 20 may detect the interference in association with each other.

Further, in recent years, for example, the LTE terminal 40 (a mobile phone such as a smart phone, or the like) provided with a function of the Wi-Fi terminal 20 has been known. In such a case, the Wi-Fi terminal 20 can receive a wireless signal from the LTE base station 30. Thus, the Wi-Fi terminal 20 can detect the interference from the LTE system 2, based on the wireless signal transmitted from the LTE base station 30. As an example, the Wi-Fi terminal 20 can detect the interference received from the LTE system 2 by measuring the received power and the like of a standard signal such as a reference signal transmitted from the LTE base station 30.

According to the fourth embodiment described above, it is possible to solve the problems described in the "location of problem", similar to each embodiment described above. In other words, according to the fourth embodiment, it is possible to suppress an overflow of the wireless signal by the asynchronous system 1 causing interference, into the transmission period, beyond the transmission stop period of the synchronous system 2. Thus, the fourth embodiment is configured to exhibit an effect that it is possible to suppress the interference caused by the overflow of the wireless signal by the asynchronous system 1 into the transmission period, beyond the transmission stop period of the synchronous system 2, which was not achieved in the related art.

### [Fifth embodiment]

The fifth embodiment corresponds to a modification example of each embodiment described above. The fifth embodiment is intended to suppress interference from the Wi-Fi system 1 (asynchronous system 1) to the LTE system 2 (synchronous system 2), without desiring the intervention of the control device 50.

The fifth embodiment has a lot in common with the second embodiment and the third embodiment. Therefore, the following description will focus on those different from these embodiments in the fifth embodiment.

Since the assumption of the fifth embodiment is the same as the assumptions described in the above "location of problem" and each embodiment, a description thereof will not be repeated here.

Since the system configuration of the fifth embodiment is the same as that of the first embodiment illustrated in FIG. 4, a description thereof will not be repeated. The fifth embodiment does not assume the existence of the control device 50, unlike the second embodiment illustrated in FIG. 6. It is noted that this does not preclude the presence of a device corresponding to the control device 50 in the fifth embodiment, but the fifth embodiment is operable even without the control device 50.

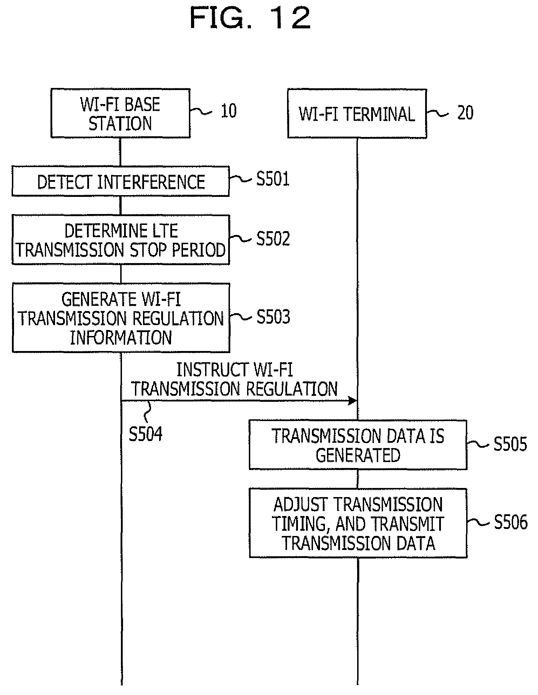

FIG. 12 is a diagram illustrating an example of a processing sequence when the Wi-Fi terminal 20 according to the fifth embodiment performs the wireless transmission.

In S501 of FIG. 12, the Wi-Fi base station 10 detects the interference received from the LTE system 2. Here, the Wi-Fi base station 10 does not have to specify an interference source, and may detect interference received from some other wireless communication systems. Since the detection of the interference may be performed in the same manner as S401 of FIG. 11 according to the fourth embodiment, here a description thereof will not be repeated.

In S502 of FIG. 12, the Wi-Fi base station 10 acquires the transmission stop period (LTE transmission stop period) of the LTE system 2. The acquisition of the LTE transmission stop period by the Wi-Fi base station 10 in S502 is different from the second embodiment to the fourth embodiment, and is performed without intervening the control device 50 or the like. Here, it is noted that the Wi-Fi base station 10 does not have to specify the interference source.

For example, the detection of the LTE transmission stop period by the Wi-Fi base station 10 can be performed as follows. The Wi-Fi base station 10 measures the collision rates in the carrier sensing for a predetermined period, as described in the fourth embodiment. Then, it is possible to acquire an intermittent (periodic) transmission stop period of the LTE system 2, by detecting, for example, that a period having a high collision rate and a period having a low collision rate are repeated at certain intervals.

Further, a femto base station (sometimes referred to as a home eNB or the like) provided with a function of the Wi-Fi base station 10 has been known. In such a case, the Wi-Fi base station 10 can acquire the transmission stop period of the LTE system 2, by receiving a control message regarding the transmission stop period from another LTE base station 30, through an interface on an LTE network side.

Thereafter, based on the transmission stop period detected in S502, the Wi-Fi base station 10 and the Wi-Fi terminal 20 may adjust the transmission timing of the Wi-Fi terminal 20 in association with each other. Specifically, S503 to S506 of FIG. 12 may be performed in the same manner as S205 to S208 of FIG. 7 according to the second embodiment. In addition, the process of S503 to S506 of FIG. 12 may be performed in the same manner as S305 to S307 of FIG. 10 according to the third embodiment. In any case, since a description thereof is identical with the description of the each embodiment described above, here a description thereof will not be repeated.

According to the fifth embodiment described above, it is possible to solve the problems described in the "location of problem", similar to each embodiment described above. In other words, according to the fifth embodiment, it is possible to suppress an overflow of the wireless signal by the asynchronous system 1 causing interference, into the transmission period, beyond the transmission stop period of the synchronous system 2. Thus, the fifth embodiment is configured to exhibit an effect that it is possible to suppress the interference caused by the overflow of the wireless signal by the asynchronous system 1 into the transmission period, beyond the transmission stop period of the synchronous system 2, which was not achieved in the related art.

### [Other modification examples]

Here, modification examples of the respective embodiment described above will be descried. These modification examples can appropriately be combined with the respective embodiments. A plurality of modification examples may be combined with the respective embodiments at the same time.

A first modification example is intended for switching the presence and absence of the application of the adjustment of the transmission timing by the Wi-Fi terminal 20, depending on the distance between the Wi-Fi terminal 20 and the Wi-Fi base station 10. In the above respective embodiments, the transmission timing is adjusted without distinguishing all of the Wi-Fi terminals 20. However, for example, it is considered that the Wi-Fi terminal 20 located close to the Wi-Fi base station 10 is relatively unlikely to interfere with the LTE system 2. Thus, for example, when a distance between the Wi-Fi base station 10 and the Wi-Fi terminal 20 is relatively short, the adjustment of the transmission timing of the Wi-Fi terminal 20 described in above respective embodiments may not be performed; and when a distance between the Wi-Fi base station 10 and the Wi-Fi terminal 20 is relatively far, the adjustment of the transmission timing of the Wi-Fi terminal 20 described in above respective embodiments may be performed. In this case, the distance between the Wi-Fi base station 10 and the Wi-Fi terminal 20 has to be known, and the distance can be achieved by obtaining, for example, the path loss between the Wi-Fi base station 10 and the Wi-Fi terminal 20.

A second modification example corresponds to the application of the first modification example. When the Wi-Fi base station 10 and the LTE base station 30 are very close to each other, it is considered that the Wi-Fi terminal 20 located close to the Wi-Fi base station 10 is also relatively likely to interfere with the LTE system 2. Thus, for example, when a distance between the Wi-Fi base station 10 and the LTE base station 30 is relatively short, the adjustment of the transmission timing of the Wi-Fi terminal 20 described in above respective embodiments may be performed without distinguishing all of the Wi-Fi terminals 20; and when a distance between the Wi-Fi base station 10 and the LTE base station 30 is relatively far, the presence and absence of the application of the adjustment of the transmission timing by the Wi-Fi terminal 20 may be switched, depending on the distance between the Wi-Fi terminal 20 and the Wi-Fi base station 10 as in the first modification example. In this case, the distance between the Wi-Fi base station 10 and the LTE base station 30 has to be recognized, and the distance can be obtained based on, for example, the position information of each base station, stored in the database about the secondary system provided in the control device 50.

A third modification example corresponds to a specific implementation example in the case where the Wi-Fi base station 10 notifies the Wi-Fi terminal 20 of the Wi-Fi transmission start prohibition period (see FIG. 8) in the above respective embodiments. For example, in the second embodiment, the Wi-Fi base station 10 can notify the Wi-Fi terminal 20 of the Wi-Fi transmission start prohibition period, instead of the Wi-Fi transmission start permission period. In this case, any packet may be used for the notification, but the notification can be implemented by using a request to send (RTS) packet or a clear to send (CTS) packet, which is defined in the IEEE 802.11 standard. Specifically, the Wi-Fi base station 10 sets the length of the Wi-Fi transmission start prohibition period in the duration field included in the RTS packet and the CTS packet, and transmits the RTS packet and the CTS packet to the Wi-Fi terminal 20. If receiving the RTS packet and the CTS packet, the Wi-Fi terminal 20 enters the transmission prohibition state (NAV: network allocation vector) only for the time that has been set in the duration field. Thus, it is possible to easily perform the transmission prohibition period notification by using the existing control packet. A field for notification of the start timing of the Wi-Fi transmission start prohibition period is not prepared in the RTS packet and the CTS packet. Therefore, the Wi-Fi base station 10 transmitting the RTS packet or the CTS packet at the start timing of the Wi-Fi transmission start prohibition period is considered to be appropriate.

A fourth modification example corresponds to the application of the third modification example. As described above, the Wi-Fi base station 10 transmits the RTS packet and the CTS packet at the start timing of the Wi-Fi transmission start prohibition period, but collision in carrier sensing is detected at this time, such that there is a possibility that transmission opportunity may not be obtained. In such a case, when the Wi-Fi base station 10 retransmits the RTS packet and the CTS packet, it is desirable to reset the value in the duration field. Specifically, a value obtained by subtracting time spent waiting for packet transmission after the Wi-Fi base station 10 detects a collision in the carrier sensing, from the initial value in the duration field is set as a re-set value. Thus, even in times when the transmission of the RTS packet and the CTS packet is redone, the Wi-Fi terminal 20 can obtain an appropriate Wi-Fi transmission start prohibition period.

A fifth modification example is intended for the change of the transmission sequence of transmission data. When there are large amount of transmission data in the Wi-Fi base station 10 or the like, transmission data that is supposed to be transmitted is stored sequentially in a buffer provided in the Wi-Fi base station 10 or the like. Normally, the transmission data is transmitted in the order stored in the buffer, but this may be considered to be not desired in some cases. As an example, it is assumed a case where the wireless signal corresponding to the transmission data in the beginning of the buffer is relatively long, and some amount of time is left up to the end of the LTE transmission stop period but the time is not enough for transmitting the wireless signal. In such a case, some amount of time is left up to the end of the LTE transmission stop period, but the wireless signal is not transmitted during the time, such that it is considered that there is a problem in terms of transmission efficiency. Therefore, in such a case, the Wi-Fi base station 10 or the like can select and transmit a wireless signal corresponding to transmission data, for which transmission can be completed up to the end of the LTE transmission stop period, from the second and subsequent transmission data from the beginning of the buffer. Furthermore, contrary to this, when there is enough time up to the end of the LTE transmission stop period, the Wi-Fi base station 10 or the like can select and transmit a wireless signal of a relatively long size, corresponding to transmission data, from the second and subsequent transmission data from the beginning of the buffer. By doing so, it becomes possible to use without wasting the time up to the end of the LTE transmission stop period, and it is believed desirable in terms of transmission efficiency.

[Functional configuration of each apparatus in a wireless communication system of each embodiment]

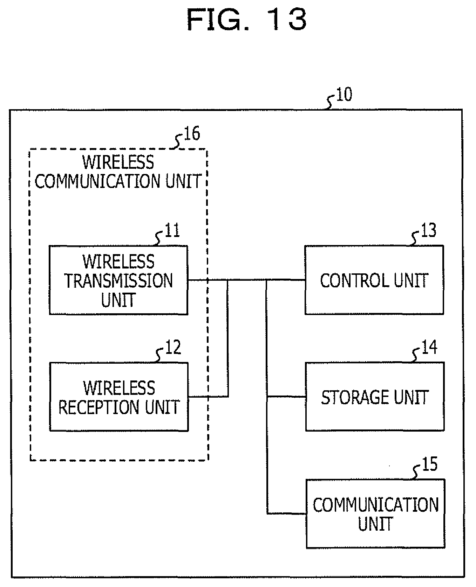

Next, a description will be made regarding the functional configuration of each apparatus in the wireless communication system of each embodiment, with reference to FIG. 13 to FIG. 15. Here, in particular, a description will be made regarding the functional configurations of the asynchronous base station (for example, the Wi-Fi base station) 10, the asynchronous terminal (for example, the Wi-Fi terminal) 20, and the control device 50. Since the functional configurations of the synchronous base station (for example, the LTE base station) 30 and the synchronous terminal (LTE terminal) 40 are respectively the same as those of the asynchronous base station 10 and the asynchronous terminal 20, a description thereof will not be repeated.

FIG. 13 is a functional block diagram illustrating an example of a configuration of the asynchronous base station 10. As illustrated in FIG. 13, the asynchronous base station 10 includes, for example, a wireless transmission unit 11, a wireless reception unit 12, a control unit 13, a storage unit 14, and a communication unit 15. These respective components are connected to each other such that the input and output of signals and data are available unidirectionally or bi-directionally. In addition, the wireless transmission unit 11 and the wireless reception unit 12 are collectively referred to as a wireless communication unit 16.

The wireless transmission unit 11 transmits a data signal and a control signal through an antenna, in a wireless communication manner. Further, the antenna may commonly be used for transmission and reception. The wireless transmission unit 11 transmits a wireless signal (a downlink wireless signal) to the asynchronous terminal 20. The wireless signal transmitted by the wireless transmission unit 11 can include any type of user data, control information, and the like (subjected to coding, modulation, and the like), which are destined to the asynchronous terminal 20.

Specific examples of the wireless signal transmitted by the wireless transmission unit 11 include respective wireless signals (arrows in FIG. 7 and FIG. 10 to FIG. 12) that the asynchronous base station (Wi-Fi base station) 10 transmits to the asynchronous terminal (Wi-Fi terminal) 20 in those drawings. The wireless signals transmitted by the wireless transmission unit 11 are not limited thereto, and include any wireless signal that the asynchronous base station 10 transmits to the asynchronous terminal 20 in the respective embodiments and modification examples.

The wireless reception unit 12 receives a data signal and a control signal, through an antenna, in a wireless communication manner. The wireless reception unit 12 receives a wireless signal (uplink wireless signal) from the asynchronous terminal 20. The wireless signal received by the wireless reception unit 12 can include any type of user data, control information, and the like (to be subjected to coding, modulation, and the like) transmitted by the asynchronous terminal 20.

Specific examples of the wireless signal received by the wireless reception unit 12 include respective wireless signals (arrows in FIG. 7 and FIG. 10 to FIG. 12) that the asynchronous base station (Wi-Fi base station) 10 receives from the asynchronous terminal (Wi-Fi terminal) 20 in those drawings. The signals received by the wireless reception unit 12 are not limited thereto, and include any wireless signal that the asynchronous base station 10 receives from the asynchronous terminal 20 in the respective embodiments and modification examples.

The control unit 13 outputs the data and the control information that has been transmitted to the asynchronous terminal 20, to the wireless transmission unit 11. The control unit 13 receives the data and the control information that has been received from the asynchronous terminal 20, from the wireless reception unit 12. The control unit 13 performs input and output of the data, the control information, the program, and the like, with a storage unit 14 to be described later. The control unit 13 performs the input and output of the data and the control information that are communicated with the control device 50, another asynchronous base station 10, another synchronous base station 30, and the like, with a communication unit 15 to be described later. The control unit 13 performs various types of control for the asynchronous base station 10 in addition thereto.

Specific examples of the process that the control unit 13 controls include control for respective signals (arrows in FIG. 5, FIG. 7 and FIG. 10 to FIG. 12) that the asynchronous base station (Wi-Fi base station) 10 transmits and receives in those drawings, and control for respective processes (rectangles in those drawings) that the base station (Wi-Fi base station) 10 performs. The processes controlled by the control unit 13 are not limited thereto, and include control for any types of processes performed by the asynchronous base station 10 in the respective embodiments and modification examples.

The storage unit 14 stores various types of information such as data, control information, and programs. The various types of information stored by the storage unit 14 include any types of information that can be stored in the asynchronous base station 10 in the respective embodiments and modification examples.

The communication unit 15 transmits and receives data and control information with the control device 50, another synchronous base station 10, another asynchronous base station 30, and the like, through wired signals or the like (may be wireless signals). Specific examples of the wired signals and the like that the communication unit 15 transmits and receives include respective wired signals (arrows in FIG. 7, FIG. 10 and FIG. 11) that the asynchronous base station (Wi-Fi base station) 10 communicates with the control device 50 in those drawings. The wired signals and the like that the communication unit 15 transmits and receives are not limited thereto, and include any wired signals that the asynchronous base station 10 communicates with the control device 50, another asynchronous base station 10, another synchronous base station 30 and the like in the respective embodiments and modification examples.

In addition, the asynchronous base station 10 may transmit and receive wireless signals with wireless communication devices (for example, the synchronous base station 30 and the synchronous terminal 40) other than the asynchronous terminal 20, through the wireless transmission unit 11 and the wireless reception unit 12.

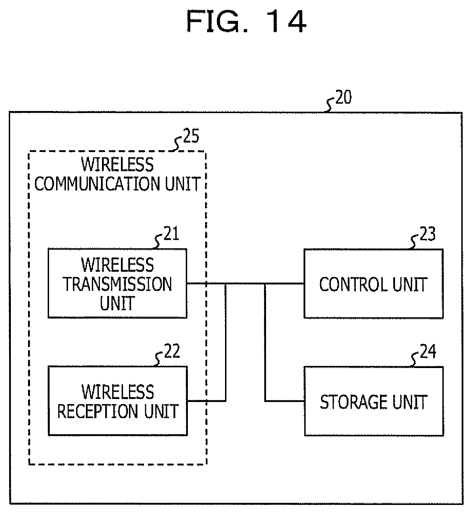

FIG. 14 is a functional block diagram illustrating an example of a configuration of the asynchronous terminal 20. As illustrated in FIG. 14, the asynchronous terminal 20 includes, for example, a wireless transmission unit 21, a wireless reception unit 22, a control unit 23, and a storage unit 24. These respective components are connected to each other such that the input and output of signals and data are available uni-directionally or bi-directionally. In addition, the wireless transmission unit 21 and the wireless reception unit 22 are collectively referred to as a wireless communication unit 25.

The wireless transmission unit 21 transmits a data signal and a control signal through an antenna, in a wireless communication manner. Further, the antenna may commonly be used for transmission and reception. The wireless transmission unit 21 transmits a wireless signal (an uplink wireless signal) to the asynchronous base station 10. The wireless signal transmitted by the wireless transmission unit 21 can include any type of user data, control information, and the like (subjected to coding, modulation, and the like), which are destined to the asynchronous base station 10.

Specific examples of the wireless signal transmitted by the wireless transmission unit 21 include respective wireless signals (arrows in FIG. 7 and FIG. 10 to FIG. 12) that the asynchronous terminal (Wi-Fi terminal) 20 transmits to the asynchronous base station (Wi-Fi base station) 10 in those drawings. The wireless signals transmitted by the wireless transmission unit 21 are not limited thereto, and include any wireless signal that the asynchronous terminal 20 transmits to the asynchronous base station 10 in the respective embodiments and modification examples.

The wireless reception unit 22 receives a data signal and a control signal, through an antenna, in a wireless communication manner. The wireless reception unit 22 receives a wireless signal (downlink wireless signal) from the asynchronous base station 10. The wireless signal received by the wireless reception unit 22 can include any type of user data, control information, and the like (to be subjected to coding, modulation, and the like) transmitted by the asynchronous base station 10.

Specific examples of the wireless signal received by the wireless reception unit 22 include respective wireless signals (arrows in FIG. 7 and FIG. 10 to FIG. 12) that the asynchronous terminal (Wi-Fi terminal) 20 receives from the asynchronous base station (Wi-Fi base station) 10 in those drawings. The signals received by the wireless reception unit 22 are not limited thereto, and include any wireless signal that the asynchronous terminal 20 receives from the asynchronous base station 10 in the respective embodiments and modification examples.

The control unit 23 outputs the data and the control information that has been transmitted to the asynchronous base station 10, to the wireless transmission unit 21. The control unit 23 receives the data and the control information that has been received from the asynchronous base station 10, from the wireless reception unit 22. The control unit 23 performs input and output of the data, the control information, the program, and the like, with a storage unit 24 to be described later. The control unit 23 performs various types of control for the asynchronous terminal 20 in addition thereto.

Specific examples of the process that the control unit 23 controls include control for respective signals (arrows in FIG. 5, FIG. 7 and FIG. 10 to FIG. 12) that the asynchronous terminal (Wi-Fi terminal) 20 transmits and receives in those drawings, and control for respective processes (rectangles in those drawings) that the asynchronous terminal (Wi-Fi terminal) 10 performs. The processes controlled by the control unit 23 are not limited thereto, and include control about any types of processes performed by the asynchronous terminal 20 in the respective embodiments and modification examples.

The storage unit 24 stores various types of information such as data, control information, and programs. The various types of information stored by the storage unit 24 include any types of information that can be stored in the asynchronous terminal 20 in the respective embodiments and modification examples.

Further, the asynchronous terminal 20 may transmit and receive wireless signals with wireless communication devices (for example, another asynchronous terminal 10, another synchronous base station 30, and another synchronous terminals 40) other than the asynchronous base station 10, through the wireless transmission unit 21 and the wireless reception unit 22.

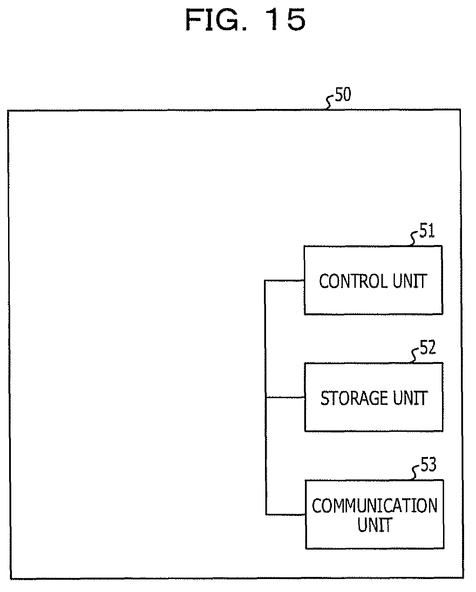

FIG. 15 is a functional block diagram illustrating an example of a configuration of the control device 50. As illustrated in FIG. 15, the control device 50 includes, for example, a control unit 51, a storage unit 52, and a communication unit 53. These respective components are connected to each other such that the input and output of signals and data are available uni-directionally or bi-directionally.

The control unit 51 performs the input and output of data, control information, programs, and the like, with a storage unit 52 to be described later. The control unit 51 performs the input and output of data and control information to be transmitted to and received from the asynchronous base station 10 and the synchronous base station 30, with a communication unit 53 to be described later. The control unit 51 performs various types of control of the control device 50, in addition thereto.

Specific examples of the process that the control unit 51 controls include control for respective signals (arrows in FIG. 7 and FIG. 10 and FIG. 11) that the control device 50 transmits and receives in those drawings, and control for respective processes (rectangles in those drawings) that the control device 50 performs. The processes controlled by the control unit 51 are not limited thereto, and include control about any types processes performed by the control device 50 in the respective embodiments and modification examples.

The storage unit 52 stores various types of information such as data, control information, and programs. The various types of information stored by the storage unit 52 include any types of information that can be stored in the control device 50 in the respective embodiments and modification examples.

The communication unit 53 transmits and receives data and control information with the asynchronous base station 10, the synchronous base station 30, and the like, through wired signals or the like (may be wireless signals). Specific examples of the wired signals and the like that the communication unit 15 transmits and receives include respective wired signals (arrows in FIG. 7, FIG. 10 and FIG. 11) that the control device 50 communicates with the asynchronous base station (Wi-Fi base station) 10 and the synchronous base station (LTE base station) 30 in those drawings. The wired signals and the like that the communication unit 53 transmits and receives are not limited thereto, and include any wired signals that the control device 50 communicates with the asynchronous base station (Wi-Fi base station) 10 and the synchronous base station (LTE base station) 30 in the respective embodiments and modification examples.

Hardware configuration of each device in wireless communication system in each embodiment

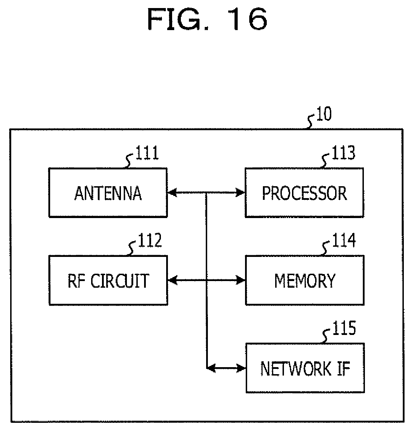

The hardware configuration of each device in a wireless communication system in the respective embodiments and the respective modification examples will be described based on FIG. 16 to FIG. 18. Here, in particular, the hardware configurations of the asynchronous base station (for example, the Wi-Fi base station) 10, the asynchronous terminal (for example, the Wi-Fi terminal) 20, and the control device 50 will be described. Since the hardware configurations of the synchronous base station (for example, the LTE base station) 30 and the synchronous terminal (LTE terminal) 40 are respectively the same as those of the asynchronous base station 10 and the asynchronous terminal 20, a description thereof will not be repeated.

FIG. 16 is a diagram illustrating an example of a hardware configuration of the asynchronous base station 10. As illustrated in FIG. 16, the asynchronous base station 10 includes, for example, a radio frequency (RF) circuit 112 provided with an antenna 111, a processor 113, a memory 114, and a network interface (IF) 115, as hardware components. These respective components are connected to each other through a bus such that the input and output of various types of signals and data are available.

The processor 113 is, for example, a central processing unit (CPU), or a digital signal processor (DSP). The memory 114 includes at least one of, for example, a random access memory (RAM) such as a synchronous dynamic random access memory (SDRAM), a read only memory (ROM), and a flash memory, and stores a program, control information, and data. In addition thereto, the asynchronous base station may be provided with an auxiliary storage device (such as a hard disk) not illustrated.

The correspondence between the functional configuration of the asynchronous base station 10 illustrated in FIG. 13 and the hardware configuration of the asynchronous base station 10 illustrated in FIG. 16 will be described. The wireless transmission unit 11 and the wireless reception unit 12 (alternatively, the wireless communication unit 16) are implemented by, for example, the RF circuit 112, or the antenna 111 and the RF circuit 112. The control unit 13 is implemented by, for example, the processor 113, the memory 114, a digital electronic circuit not illustrated, and the like. Examples of the digital electronic circuit include an application specific integrated circuit (ASIC), a field-programming gate array (FPGA), a large scale integration (LSI), and the like. The storage unit 14 is implemented by, for example, the memory 114. The communication unit 15 is implemented by, for example, the network IF 115.

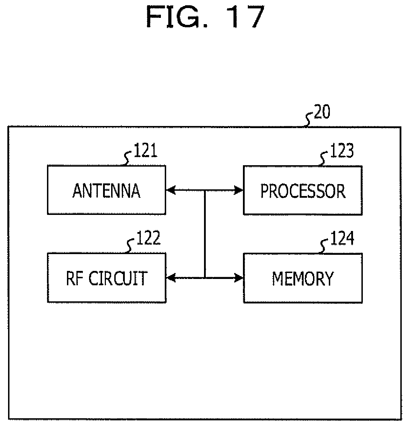

FIG. 17 is a diagram illustrating an example of a hardware configuration of the asynchronous terminal 20. As illustrated in FIG. 17, the asynchronous terminal 20 includes, for example, a radio frequency (RF) circuit 122 provided with an antenna 121, a processor 123, and a memory 124, as hardware components. These respective components are connected to each other through a bus such that the input and output of various types of signals and data are available.

The processor 123 is, for example, a central processing unit (CPU), or a digital signal processor (DSP). The memory 124 includes at least one of, for example, a random access memory (RAM) such as a synchronous dynamic random access memory (SDRAM), a read only memory (ROM), and a flash memory, and stores a program, control information, and data.

The correspondence between the functional configuration of the asynchronous terminal 20 illustrated in FIG. 14 and the hardware configuration of the asynchronous terminal 20 illustrated in FIG. 17 will be described. The wireless transmission unit 21 and the wireless reception unit 22 (alternatively, the wireless communication unit 25) are implemented by, for example, the RF circuit 122, or the antenna 121 and the RF circuit 122. The control unit 23 is implemented by, for example, the processor 123, the memory 124, a digital electronic circuit, not illustrated, and the like. Examples of the digital electronic circuit include an application specific integrated circuit (ASIC), a field-programming gate array (FPGA), a large scale integration (LSI), and the like. The storage unit 24 is implemented by, for example, the memory 124.

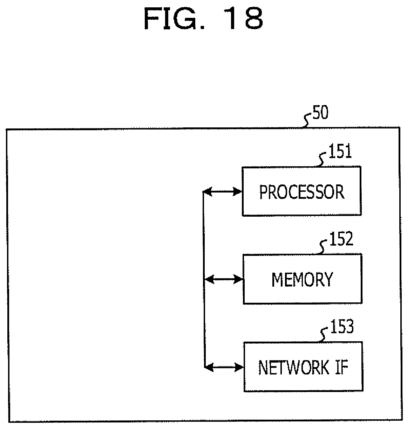

FIG. 18 is a diagram illustrating an example of a hardware configuration of the control device 50. As illustrated in FIG. 18, the control device 50 includes, for example, a processor 151, a memory 152, and a network interface (IF) 153 as hardware components. These respective components are connected to each other through a bus such that the input and output of various types of signals and data are available.

The processor 151 is, for example, a central processing unit (CPU), or a digital signal processor (DSP). The memory 152 includes at least one of, for example, a random access memory (RAM) such as a synchronous dynamic random access memory (SDRAM), a read only memory (ROM), and a flash memory, and stores a program, control information, and data. In addition thereto, the asynchronous base station may be provided with an auxiliary storage device (such as a hard disk) not illustrated.

The correspondence between the functional configuration of the control device 50 illustrated in FIG. 15 and the hardware configuration of the control device 50 illustrated in FIG. 18 will be described. The control unit 51 is implemented by, for example, the processor 153, the memory 154, a digital electronic circuit, not illustrated, and the like. Examples of the digital electronic circuit include an application specific integrated circuit (ASIC), a field-programming gate array (FPGA), a large scale integration (LSI), and the like. The storage unit 52 is implemented by, for example, the memory 152. The communication unit 53 is implemented by, for example, the network IF 153.

Reference Signs List
- 1: asynchronous system (for example, Wi-Fi system)
- 2: synchronous system (for example, LTE system)
- 10: asynchronous base station (for example, Wi-Fi base station)
- 20: asynchronous terminal (for example, Wi-Fi terminal)
- 30: synchronous base station (for example, LTE base station)
- 40: synchronous terminal (for example, LTE terminal)
- 50: control device

## Claims

1. A wireless communication method of a wireless communication system including a synchronous system that performs synchronous wireless communication, and an asynchronous system that performs asynchronous wireless communication interfering with the synchronous system, the wireless communication method causing:
a wireless terminal belonging to the asynchronous system to acquire first information regarding a transmission stop period of a first wireless signal of the synchronous system; and
the wireless terminal to adjust timing when the wireless terminal transmits a second wireless signal, so as to suppress an overflow of the second wireless signal into a period subsequent to the transmission stop period, based on the first information.

2. The wireless communication method according to Claim 1,
wherein the wireless terminal receives the first information from an asynchronous base station belonging to the asynchronous system.

3. The wireless communication method according to Claim 1,
wherein the wireless terminal is capable of performing the synchronous wireless communication while belonging to the synchronous system, and receives the first information from a synchronous base station belonging to the synchronous system, while the wireless terminal belongs to the synchronous system.

4. The wireless communication method according to Claim 1,
wherein the wireless terminal generates the first information based on measurement of a wireless signal.

5. The wireless communication method according to Claim 1,
wherein a first frequency bandwidth used by the synchronous system, and a second frequency bandwidth used by the asynchronous system are included in a frequency bandwidth that is allocated to another wireless communication system which is different from any one of the synchronous system and the asynchronous system.

6. A wireless communication system including a synchronous system that performs synchronous wireless communication, and an asynchronous system that performs asynchronous wireless communication interfering with the synchronous system, the wireless communication system comprising:
a wireless terminal belonging to the asynchronous system,
wherein the wireless terminal acquires first information regarding a transmission stop period of a first wireless signal of the synchronous system, and adjusts timing when the wireless terminal transmits a second wireless signal, so as to suppress an overflow of the second wireless signal into a period subsequent to the transmission stop period, based on the first information.

7. A wireless terminal belonging to an asynchronous system of a wireless communication system including a synchronous system that performs synchronous wireless communication, and the asynchronous system that performs asynchronous wireless communication interfering with the synchronous system, the wireless terminal comprising:
a control unit that acquires first information regarding a transmission stop period of a first wireless signal of the synchronous system, and adjusts timing when the wireless terminal transmits a second wireless signal, so as to suppress an overflow of the second wireless signal into a period subsequent to the transmission stop period, based on the first information.

8. A wireless base station belonging to an asynchronous system of a wireless communication system including a synchronous system that performs synchronous wireless communication, and the asynchronous system that performs asynchronous wireless communication interfering with the synchronous system, the wireless base station comprising:
a control unit that acquires first information regarding a transmission stop period of a first wireless signal of the synchronous system, and adjusts timing when the wireless base station transmits a second wireless signal, so as to suppress an overflow of the second wireless signal into a period subsequent to the transmission stop period, based on the first information.

9. A control device of a wireless communication system including a synchronous system that performs synchronous wireless communication, and an asynchronous system that performs asynchronous wireless communication interfering with the synchronous system, the control device comprising:
a control unit that acquires first information regarding a transmission stop period of a first wireless signal of the synchronous system; and
a communication unit that transmits a signal for adjusting timing when the wireless communication device transmits a second wireless signal to a wireless communication device belonging to the asynchronous system, so as to suppress an overflow of the second wireless signal into a period subsequent to the transmission stop period, based on the first information.
